# EUROPÄISCHE PATENTSCHRIFT

(11) **EP 1 143 762 B1**
(45) Veröffentlichungstag und Bekanntmachung des Hinweises auf die Patenterteilung: **09.06.2004**
(21) Anmeldenummer: 01440040.2
(22) Anmeldetag: 22.02.2001
(51) Int. Cl.: H04Q 11/04

(54) **Vorrichtung und Verfahren zum Filtern von Signalen**
Apparatus and method for signal filtering
Dispositif et méthode de filtrage de signaux

(30) Priorität: 09.03.2000 DE 10011125
(43) Veröffentlichungstag der Anmeldung: 10.10.2001
(73) Patentinhaber: ALCATEL, 75008 Paris (FR)
(72) Erfinder: Aschrafi, Bagher, 73240 Wendlingen (DE); Bäder, Rainer, 70771 Leinfelden (DE)
(74) Vertreter: Menzietti, Domenico, Dipl.-Ing

(56) Entgegenhaltungen:
- EP-A- 0 760 587
- EP-A- 0 778 683
- EP-A- 0 923 221
- WO-A-99/51019
- WO-A-99/65217
- DE-U- 29 914 706

## Beschreibung

Die Erfindung betrifft eine Vorrichtung zur Filterung von Signalen gemäß dem Oberbegriff des Patentanspruchs 1 sowie ein Verfahren zum Filtern von Signalen gemäß dem Oberbegriff des Patentanspruchs 8.

In heutigen Telekommunikationsnetzen werden vielfach XDSL-Techniken zum Anschluss von Teilnehmern verwendet. DSL bedeutet Digital Subscriber Line, d.h. ein Teilnehmer erhält einen digitalen Zugang mit einer Datenrate im Megabit-Bereich. Dies ist insbesondere für die Anbindung ans Internet günstig, da das downloaden von Informationen, die vielfach auch Bilder beinhalten, beschleunigt wird. X steht beispielsweise für A, S, H oder V, wobei A Asynchron, S Synchron, H High bitrate und V Very high bitrate bedeutet. Beim Teilnehmer wird beispielsweise ein ADSL-Modem installiert, über das er Zugang zu verschiedenen Diensten hat. Zur Integration von Internetdiensten und Sprach- und/oder Bilddiensten wird über eine ADSL-Leitung auch ISDN oder POTS übertragen, ISDN=Integrated Services Digital Network, POTS= Plain Old Telefon Service.

Das ISDN dient z.B. dazu, digitale Telefonsignale und/oder digitale Bildtelefonsignale zu übertragen. Das POTS dient dazu, analoge Telefonsignale zu übertragen. Ein Teilnehmer, der bisher nur einen analogen Telefonanschluss hatte, kann seinen Anschluss mit ADSL aufrüsten, derart, dass er weiterhin analog telefonieren kann, gleichzeitig aber nun im Internet surfen kann.

Um insbesondere Sprache über ADSL zu übertragen werden somit ISDN oder POTS genutzt. Entweder ISDN oder POTS werden gleichzeitig mit ADSL zu einem Teilnehmer übertragen. ISDN und POTS werden in einem ersten Frequenzbereich, ADSL in einem zweiten Frequenzbereich übertragen. Die beiden Frequenzbereiche überlappen nicht. Es wird eine Vorrichtung benötigt, die ISDN und POTS Signale trennt. Üblicherweise wird ein POTS Filter und ein ISDN Filter verwendet. Sowohl bei ISDN als auch bei POTS werden Gleichstromkomponenten zum Zwecke der Fernspeisung mit übertragen. Auf Grund der Gleichstromkomponenten werden zum Aufbau der Filter Spulen in den Längszweigen benötigt. Die Spulen sind teuer, da sie hohen Anforderungen genügen müssen.

WO 99/65217 offenbart eine Vorrichtung zur Filterung von POTS-Signalen. Die Vorrichtung beinhaltet eine Reihenschaltung aus einer ersten Weiche, einem aktiven Filter und einer zweiten Weiche. POTS-Signalkomponenten werden über das aktive Filter weitergeleitet, POTS-Gleichstromkomponenten über einen separaten Pfad. Auf diese Art und Weise konn das aktive Filter mit relativ geringem Aufwand, insbesondere ohne teure Spulen in den Längszweigen aufgebaut werden.

EP 0 923 221 A1 offenbart eine alternative Vorrichtung zur Filterung von POTS-Signalen. Die Vorrichtung beinhaltet zwei POTS-Filter und einen Detektor. Der Detektor dient zur Detektion von Sprach- und Signalisierungssignalen. Die beiden Filter sind als POTS-Sprach-Filter, das aktiviert wird, wenn Sprachsignale detektiert wurden und als POTS-Signalisierungs-Filter, das aktiviert wird, wenn Signalisierungssignale detektiert wurden, ausgeführt. Dies hat den Vorteil, dass stets optimierte Filterantworten gegeben werden und die Verluste und Interferenzen minimiert werden. Das POTS-Sprachfilter ist dazu als Tiefpassfilter mit niedriger Ordnung realisiert, das POTS-Signalisierungs-Filter als Tiefpassfilter mit hoher Ordnung.

Die Erfindung offenbart eine Vorrichtung zur Filterung von Signalen gemäß Patentanspruch 1 und ein Verfahren zum Filtern von Signalen gemäß Patentanspruch 8.

Die Erfindung stellt insbesondere eine Vorrichtung zur Filterung von ISDNund POTS-Signalen aus Signalgemischen beinhaltend eine ISDN-Signalkomponente und eine ISDN-Gleichstromkomponente oder eine POTS-Signalkomponente und eine POTS-Gleichstromkomponente vor, die dadurch gekennzeichnet ist, dass die Vorrichtung eine Reihenschaltung aus einer ersten Weiche, einer Filterbank und einer zweiten Weiche aufweist, dass die Weichen geeignet sind, die ISDN- und POTS-Signalkomponenten über die Filterbank weiterzuleiten und die ISDN- und POTS-Gleichstromkomponenten über einen separaten Pfad weiterzuleiten, dass ein Detektor vorgesehen ist, der geeignet ist, die ISDN- und die POTS-Gleichstromkomponenten zu detektieren, dass die Filterbank ein ISDN-Filter und ein POTS-Filter beinhaltet, die über den Detektor ansteuerbar sind, dass der Detektor das ISDN-Filter aktiviert, wenn die ISDN-Gleichstromkomponente detektiert wurde, und dass der Detektor das POTS-Filter aktiviert, wenn die POTS-Gleichstromkomponente detektiert wurde.

Die Gleichstromkomponente der Fernspeisung wird von den eigentlichen Nutzinformationssignalen für ISDN und POTS getrennt, z.B. unter Verwendung eines Kondensators, und über einen separaten Pfad weitergeleitet. Die zu filternden Signale enthalten damit keine Gleichstromkomponente mehr, d.h. keinen DC-Offset. Dadurch können Filter mit einem einfacheren Aufbau verwendet werden, z.B. Kondensatoren statt Spulen in den Längszweigen der Filter oder Filter mit einer niedrigeren Spannungsverträglichkeit, z.B. im Bereich von 10 Volt bis 15 Volt statt wie bisher 100 Volt. Kondensatoren haben kleinere Abmessungen als Spulen, sind billiger und können einfacher eingebaut werden. Kondensatoren sind auch integrierbar in eine integrierte Schaltung. Die Filter werden somit kostengünstiger. Die Filter können auch aus aktiven Komponenten aufgebaut sein, z.B. mittels Thyristoren. Zusätzlich wird der Wert der Gleichstromkomponente eines empfangenen Signalgemisches detektiert oder es wird zumindest festgestellt, ob der Wert der Gleichstromkomponente über oder unterhalb einer vorgegebenen Schwelle liegt. ISDN Signale werden z.B. zusammen mit einer Fernspeisespannung von ca. 100 Volt übertragen, POTS Signale hingegen zusammen mit einer Fernspeisespannung von ca. 60 Volt. Mittels einer Schwelle bei ca. 80 Volt sind ISDN und POTS Signale unterscheidbar; liegt die Fernspeisespannung über 80 Volt handelt es sich um ISDN Signale, liegt sie unter 80 Volt handelt es sich um POTS Signale. Abhängig vom Ergebnis des Wertes der Gleichstromkomponente wird ein automatisches Anschalten oder Aktivieren des ISDN oder POTS Filters durchgeführt. Auf einfache Art und Weise stellt der Detektor also fest, ob ISDN oder POTS Signale anliegen und schaltet den zugehörigen Filter ein. Die anliegenden Signale werden dem entsprechenden Filter zugeführt. Der Filter filtert aus dem anliegenden Signalgemisch, das zusätzlich noch ADSL Signale enthalten kann, das entsprechende Signal heraus, z.B. ISDN, und leitet nur dieses weiter. Liegt kein ISDN Signal mehr an, wird der entsprechende Filter ausgeschaltet oder deaktiviert. Im ausgeschalteten oder deaktivierten Zustand verbraucht das Filter keinen Strom. Damit wird Strom gespart, wenn keine Signale empfangen werden oder anliegen. Für die Filter wird keine eigene Stromversorgung benötigt. Die Fernspeisung kann zur Speisung der Filter eingesetzt werden. Dazu beinhaltet der Detektor einen DC/DC Wandler, der die anliegende Fernspeisespannung, z.B. 100 Volt im Falle ISDN in eine für die Filter geeignete Spannung, z.B. 5 Volt umwandelt.

Auf einfache Art und Weise wird somit eine kostengünstige Integration von ADSL (oder SDSL oder XDSL) und ISDN bzw. POTS ermöglicht.

Die Erfindung stellt zudem ein Verfahren zum Filtern von ersten und zweiten Signalen aus Signalgemischen beinhaltend eine erste Signalkomponente und eine erste Gleichstromkomponente oder eine zweite Signalkomponente und eine zweite Gleichstromkomponente vor, das dadurch gekennzeichnet ist, dass zunächst die Signalkomponente und die Gleichstromkomponente eines empfangenen Signalgemisches voneinander getrennt werden, dass anhängig von der Höhe der Gleichstromkomponente ein erstes Filter zur Herausfilterung der ersten Signalkomponente aktiviert wird, wenn die Gleichstromkomponente die erste Gleichstromkomponente ist, und ein zweites Filter zur Herausfilterung der zweiten Signalkomponente aktiviert wird, wenn die Gleichstromkomponente die zweite Gleichstromkomponente ist, und dem aktivierten Filter die Signalkomponente zugeführt wird, und dass anschließend die gefilterte Signalkomponente und die Gleichstromkomponente zusammengeführt werden.

Die Erfindung ist somit nicht auf die Integration von ADSL und ISDN bzw. POTS beschränkt, sondern kann insbesondere auf alle Systeme übertragen werden, in denen eine Trennung zwischen mindestens zwei unterschiedlichen Informationssignalen, die jeweils mit Gleichstromkomponenten übertragen werden, erfolgen muss.

Die Erfindung wird im folgenden anhand von zwei Ausführungsbeispielen unter Zuhilfenahme von fünf Figuren erläutert. Es zeigen:
- Fig. 1: eine schematische Darstellung eines Ausschnitts eines Kommunikationsnetzes zur Übertragung von ADSL und ISDN/POTS,
- Fig. 2: eine schematische Darstellung einer erfindungsgemäßen Vorrichtung zur Filterung von ISDN und POTS,
- Fig. 3: einen schematischen Aufbau einer erfindungsgemäßen Filterbank der Vorrichtung aus Fig. 2,
- Fig. 4: einen schematischen Aufbau eines ISDN Filters der Filterbank aus Fig. 3,
- Fig. 5: einen schematischen Aufbau eines POTS Filters der Filterbank aus Fig. 3 und
- Fig. 6: eine schematische Darstellung einer erfindungsgemäßen Vorrichtung zur Filterung von Signalen.

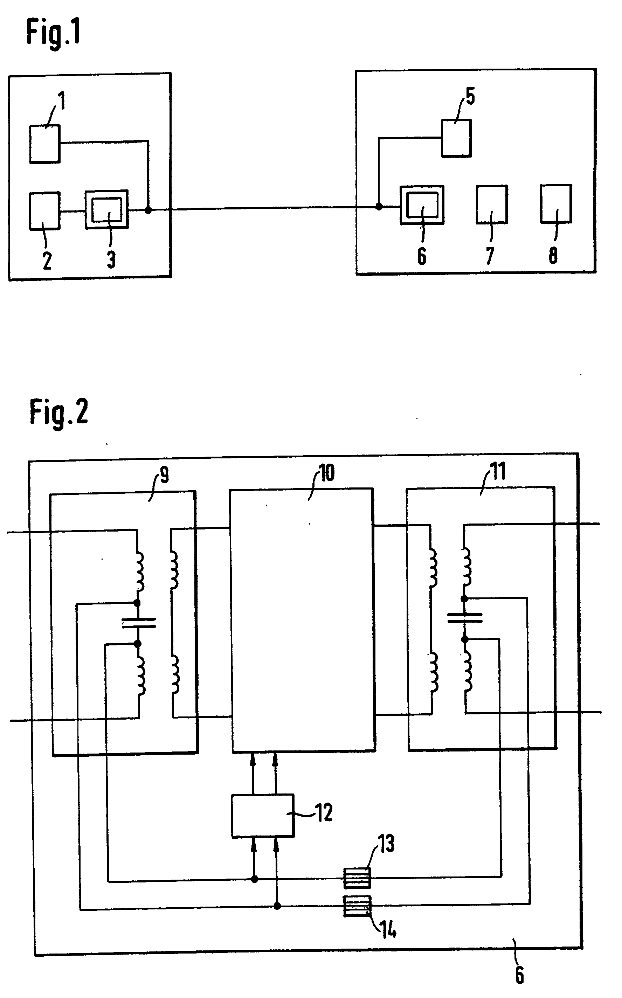

Das erste Ausführungsbeispiel wird nun zunächst anhand von Fig. 1 erläutert. Fig. 1 zeigt einen Ausschnitt eines Kommunikationsnetzes zur Übertragung von ADSL und ISDN/POTS. Das Kommunikationsnetz ist ein übliches Fernsprechnetz, bei dem es von einer Vermittlungsstelle Punkt-zu-Punkt Verbindungen zu einzelnen Teilnehmern gibt. Die Teilnehmer können sowohl ISDN als auch POTS Kunden sein. Das Kommunikationsnetz unterstützt somit sowohl die alten analogen Anschlüsse als auch die digitalen ISDN Anschlüsse. Zusätzlich ist das Kommunikationsnetz ADSLfähig gemacht. Jeder ADSL Kunde hat ein ADSL-Modem 5, über das der ADSL Verkehr abgewickelt wird, z.B. Internetzugänge. Über eine Leitung 4 zwischen der Vermittlungsstelle und einem Teilnehmer werden somit gleichzeitig zwei Dienste angeboten ADSL und ISDN oder ADSL und POTS. Eine Vorrichtung 3 auf der Vermittlungsseite und eine Vorrichtung 6 auf Teilnehmerseite sorgen für eine Filterung der ISDN bzw. POTS Signale. Der Teilnehmer im Beispiel ist ein ADSL und ISDN Kunde. Er hat ein ADSL Modem 5 für die ADSL Dienste. Er hat eine Vorrichtung 6 zur Filterung der ISDN Signale aus dem von der Vermittlungsstelle empfangenen Signalgemisch beinhaltend ADSL Signale, ISDN Signale sowie ISDN Gleichstromkomponenten. Die Ausgangssignale der Vorrichtung 6 enthalten auf der Teilnehmerseite lediglich ISDN Signale inklusive der ISDN Gleichstromkomponenten, aber keine ADSL Signale mehr. Die Vorrichtung 6 stellt somit Einrichtung mit integrierter Filterfunktion dar, die insbesondere ihre Anwendung findet in Netzen, in denen außer ISDN Signalen zusätzliche Dienste angeboten werden, z.B. XDSL, die üblicherweise in einem anderen Frequenzbereich übertragen werden, so dass die ISDN Signale mittels eines Filters separiert werden können. Denkbar ist eine Anwendung der Vorrichtung 6 auch in Kabelfernsehverteilnetzen, die mittels eines Rückkanals aufgerüstet werden, so dass außer der Verteilung von Fernsehsignalen auch kommunikative Dienste, wie z.B. ISDN als overlay angeboten werden können. Auch in Power Line Netzen, bei denen die ISDN Signale beim Teilnehmer separiert werden müssen, ist der Einsatz der Vorrichtung 6 möglich. Die ISDN Signale und die Gleichstromkomponenten werden einem ISDN Netzabschluss 7 zugeführt. Der Netzabschluss 7 ist üblicherweise als sogenannter NTBA mit zwei Nutzinformationskanälen (zwei 64 kbit/s B-Kanäle) und einem Signalisierungskanal ( ein 16 kbit/s D-Kanal) ausgeführt; NTBA=Network Termination Basic rate Access. An den Netzabschluss 7 können bis zu acht Endgeräte 8 angeschlossen werden, z.B. ein ISDN Telefon, ein Faxgerät, ein Bildtelefon, etc. Die von einem Teilnehmer zur Vermittlungsstelle übertragenen ADSL Informationen, z.B. Abrufsignale, gelangen über ein ADSL Modul 1 in ein vom Fernsprechnetz unabhängiges Netz, z.B. zu einem Service Provider, der einen Internetzugang bereitstellt. Die von einem Teilnehmer zur Vermittlungsstelle übertragenen ISDN Informationen, z.B. Telefonsignale, gelangen über die Vorrichtung 3, die alle ADSL Signale ausblendet und die ISDN Signale gefiltert weiterleitet zu einem ISDN Modul 2 und von da aus ins ISDN Netz. Anstelle der Kombination ADSL und ISDN kann auch die Kombination ADSL und POTS verwendet werden. Dann ist das Modul 2 ein POTS Modul und der Netzabschluss 7 ein POTS Netzabschluss. Als Endgeräte 8 werden POTS Endgeräte, z.B. analoge Telefone, verwendet.

Das erste Ausführungsbeispiel wird nun weiter anhand von Fig. 2 erläutert. Fig. 2 zeigt eine erfindungsgemäße Vorrichtung zur Filterung von ISDN und POTS. Die Vorrichtung entspricht der Vorrichtung 6 aus Fig. 1. Die Vorrichtungen 3 und 6 aus Fig. 1 gleichen sich im Aufbau und sind beide zur bidirektionalen Filterung geeignet, so dass auf eine detaillierte Beschreibung der Vorrichtung 3 verzichtet wird. Sowohl für die Kombination ADSL und ISDN als auch ADSL und POTS werden die Vorrichtungen 3 und 6 verwendet. Sie sind daher universell einsetzbar.

Vorrichtung 6 beinhaltet eine Reihenschaltung aus einer ersten Weiche 9, einer Filterbank 10 und einer zweiten Weiche 11. Die Vorrichtung 6 beinhaltet ferner einen Detektor 12 sowie zwei Drosseln 13 und 14.

Bei einer ISDN Verbindung zwischen Vermittlungsstelle und Teilnehmer werden ISDN Signalkomponenten (Nutzinformation) und Gleichstromkomponenten (zum Zwecke der Fernspeisung) von der Vermittlungsstelle zum Teilnehmer übertragen. Sowohl die ISDN Signalkomponenten als auch die ISDN Gleichstromkomponenten werden von Weiche 9 empfangen. Weiche 9 beinhaltet einen Übertrager, der aus einer Primärseite und einer Sekundärseite aufgebaut ist. Die Primärseite beinhaltet eine Reihenschaltung aus einer ersten Spule, einem Kondensator und einer zweiten Spule, wobei die Gleichstromkomponente zwischen dem Kondensator und der ersten Spule und zwischen dem Kondensator und der zweiten Spule abgegriffen wird. Die Sekundärseite beinhaltet eine Reihenschaltung aus einer dritten und vierten Spule. Der Übertrager dient zur galvanischen Trennung, wodurch Interferenzen minimiert werden. Die ISDN Signalkomponente wird von der Primärseite zur Sekundärseite übertragen und der Filterbank 10 zugeführt. Die ISDN Gleichstromkomponente wird auf der Primärseite abgegriffen und über separate Leitungen zur Weiche 11 übertragen, d.h. sie wird insbesondere nicht über die Filterbank 10 übertragen. In die separaten Leitungen sind zwei Drosseln eingeschleift. Die Drosseln haben einen Durchlassbereich bis 50 Hertz und als elektronische Drosseln ausgeführt. Die Drosseln dienen als Tiefpass, um die ISDN Signalkomponenten sowie die ADSL Signale auszublenden.

Der Detektor 12 ist als Schwellenwertdetektor ausgeführt. Es hat eine Schwelle von ca. 80 Volt. Der Detektor 12 hat die Aufgabe, zu ermitteln, ob die empfangene, anliegende Gleichstromkomponente die Schwelle überoder unterschreitet. Die Fernspeisung bei ISDN erfolgt mit ca. 100 Volt, wohingegen die Fernspeisung bei POTS bei ca. 60 Volt erfolgt. Wird nun eine Gleichspannungskomponente ermittelt, die die Schwelle überschreitet, so handelt es sich um ISDN Signale. Wird eine Gleichspannungskomponente ermittelt, die die Schwelle unterschreitet, so handelt es sich um POTS Signale.

Die Filterbank 10 beinhaltet zwei Filter, ein ISDN Filter zur Filterung der ISDN Signalkomponenten und ein POTS Filter zur Filterung der POTS Signalkomponenten. Beide Filter werden durch den Detektor 12 angesteuert. Detektiert der Detektor 12 ISDN Signalkomponenten, so wird das ISDN Filter aktiviert, detektiert er POTS Komponenten, so wird das POTS Filter aktiviert. Die Aktivierung erfolgt beispielsweise durch Umlegen von Schaltern. Die Schalter können auch als Relais ausgeführt sein, die in der einen Stellung das POTS Filter aktivieren und in der anderen Stellung das ISDN Filter.

Der Detektor 12 beinhaltet zusätzlich einen DC/DC-Wandler zur Bereitstellung der Versorgungsspannung für das aktive Filter aus der Fernspeisespannung. Ein Teil der ISDN Gleichstromkomponente wird DC/DC gewandelt, z.B. von 100 Volt in 5 Volt und dem ISDN Filter zugeführt. Im POTS Betrieb wird ein Teil der POTS Gleichstromkomponente DC/DC gewandelt und dem POTS Filter zugeführt.

Die in der Filterbank 10 gefilterten ISDN Signalkomponenten bzw. POTS Signalkomponenten werden der Weiche 11 zugeführt. Die Weiche 11 beinhaltet einen Übertrager, der aus einer Primärseite und einer Sekundärseite aufgebaut ist. Die Primärseite beinhaltet eine Reihenschaltung aus einer ersten Spule, einem Kondensator und einer zweiten Spule, wobei die Gleichstromkomponente zwischen dem Kondensator und der ersten Spule und zwischen dem Kondensator und der zweiten Spule eingefügt wird. Die Sekundärseite beinhaltet eine Reihenschaltung aus einer dritten und vierten Spule. Der Übertrager dient zur galvanischen Trennung, wodurch Interferenzen minimiert werden. Die gefilterte ISDN oder POTS Signalkomponente wird von der Sekundärseite zur Primärseite übertragen und zusammen mit der zugehörigen Gleichstromkomponente dem Ausgang zugeführt.

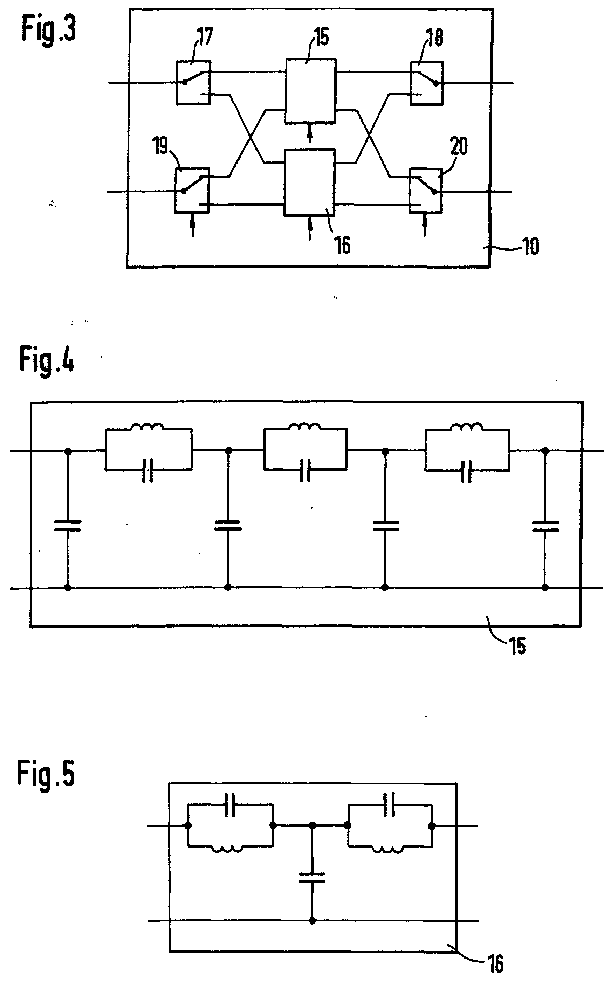

Das erste Ausführungsbeispiel wird nun weiter anhand von Fig. 3 erläutert. Fig. 3 zeigt die erfindungsgemäße Filterbank 10 aus Fig. 2. Die Filterbank 10 beinhaltet ein ISDN Filter 15, ein POTS Filter 16 sowie vier Schalter 17, 18, 19, 20. Die vier Schalter 17, 18, 19, 20 sind derart angeordnet, dass sie in der einen Stellung das ISDN Filter aktivieren und in der anderen Stellung das POTS Filter. Die Schalter 17, 18, 19, 20 werden vom Detektor 12 angesteuert. Der Detektor 12 liefert zusätzlich die Versorgungsspannungen für die Filter 15 und 16. Zum Stromsparen wird jeweils nur das aktive Filter mit Strom versorgt.

Das erste Ausführungsbeispiel wird nun weiter anhand von Fig. 4 erläutert. Fig. 4 zeigt das ISDN Filter 15 aus Fig. 3. Das ISDN Filter 15 hat im Längszweig eine Reihenschaltung aus drei LC-Gliedern. Jedes LC-Glied stellt eine Parallelschaltung einer Spule und eines Kondensators dar. Es sind vier Querzweige vorgehen, die jeweils einen Kondensator beinhalten. Die Werte der Kondensatoren und Spulen sind so gewählt, dass sie die Filtereigenschaft im für die Übertragung der ISDN Signale vorgegebenen Frequenzbereich optimiert durchführen können. Das ISDN Filter kann auch als duale oder äquivalente Schaltung zu obiger Konfiguration ausgeführt sein.

Das erste Ausführungsbeispiel wird nun weiter anhand von Fig. 5 erläutert. Fig. 5 zeigt das POTS Filter 16 aus Fig. 3. Das POTS Filter 16 hat im Längszweig eine Reihenschaltung aus zwei LC-Gliedern. Jedes LC-Glied stellt eine Parallelschaltung einer Spule und eines Kondensators dar. Es ist ein Querzweig vorgehen, der einen Kondensator beinhaltet. Die Werte der Kondensatoren und Spulen sind so gewählt, dass sie die Filtereigenschaft im für die Übertragung der POTS Signale vorgegebenen Frequenzbereich optimiert durchführen können. Das POTS Filter kann auch als duale oder äquivalente Schaltung zu obiger Konfiguration ausgeführt sein.

Das erste Ausführungsbeispiel zeigt eine Anwendung der Erfindung für ISDN und POTS. Die Erfindung ist nicht auf diese Signale beschränkt. Die Erfindung kann auch bei mehr als zwei Signalen angewendet werden. Die Filterbank enthält dann mehr als zwei aktivierbare Filter. Grundsätzlich können alle Signalgemische beinhaltend mindestens zwei Signalkomponenten und mindestens eine Gleichstromkomponente detektiert und gefiltert werden.

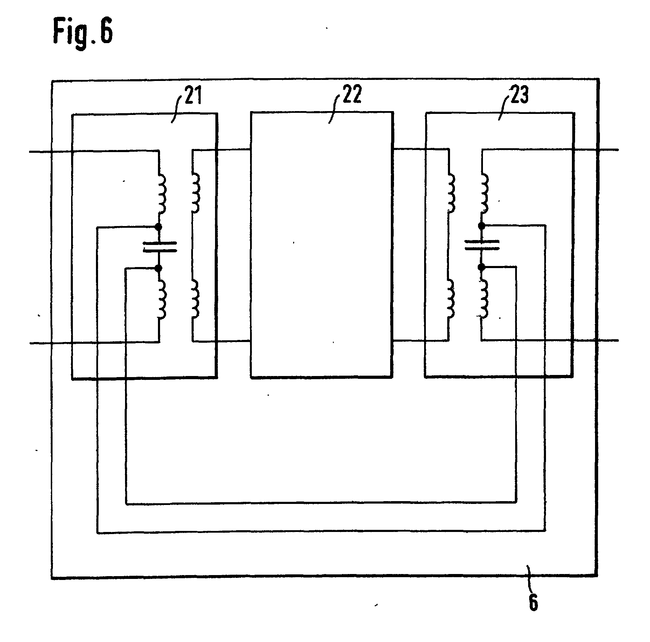

Das zweite Ausführungsbeispiel wird nun unter Zuhilfenahme von Fig. 6 erläutert. Fig. 6 zeigt eine erfindungsgemäße Vorrichtung zur Filterung von Signalen. Die Vorrichtung entspricht beispielsweise der Vorrichtung 6 aus Fig. 1. Die Vorrichtungen 3 und 6 aus Fig. 1 gleichen sich im Aufbau, so dass auf eine detaillierte Beschreibung der Vorrichtung 3 verzichtet wird. Sowohl für die Kombination ADSL und ISDN als auch ADSL und POTS werden die Vorrichtungen 3 und 6 verwendet. Sie sind daher universell einsetzbar.

Die erfindungsgemäße Vorrichtung gemäß Fig. 6 dient zur Filterung von Signalen aus Signalgemischen beinhaltend eine erste Signalkomponente und eine erste Gleichstromkomponente. Die Vorrichtung beinhaltet eine Reihenschaltung aus einer ersten Weiche 21, einem Filter 22 und einer zweiten Weiche 23. Die Weichen 21 und 23 entsprechen ihren Aufbau und ihrer Funktion den Weichen 9 und 10 aus Fig. 2. Die Weichen 21, 23 sind geeignet, die erste Signalkomponente, z.B. eine ISDN-Signalkomponente oder eine POTS-Signalkomponente, über das Filter 22 weiterzuleiten und die erste Gleichstromkomponente, z.B. eine ISDN-Gleichstromkomponente oder eine POTS-Gleichstromkomponente, über einen separaten Pfad weiterzuleiten. Das Filter 22 ist beispielsweise als ISDN-Filter oder als POTS-Filter ausgebildet. Im Gegensatz zur Vorrichtung nach Fig. 2 beinhaltet die Vorrichtung nach Fig. 6 nur ein Filter, das fest verdrahtet ist und nicht aktivierbar und deaktivierbar, sondern stetig funktionsfähig ist. Der Aufbau des Filters 22 entspricht beispielsweise dem Aufbau eines der Filter aus Fig. 4 oder Fig. 5. Das Filter 22 kann als passives Filter ausgelegt sein. In diesem Fall benötigt es keine Stromversorgung.

Das Signalgemisch kann mindestens eine zweite Signalkomponente beinhaltet, insbesondere eine XDSL-Signalkomponente. Die Weichen 21, 23 sind geeignet, die zweite Signalkomponente zum Filter 22 weiterzuleiten. Das Filter 22 ist geeignet, die zweite Signalkomponente auszublenden und die erste Signalkomponente gefiltert weiterzuleiten.

Im Gegensatz zur Fig. 2 entfällt nun der Detektor, was den Schaltungsaufbau vereinfacht. Ohne Detektor entfällt die Erkennung unterschiedlicher Signalkomponenten, so dass die Vorrichtung nach Fig. 6 abhängig vom verwendeten Filter 22 in der Regel nur eine bestimmte Signalkomponente filtern kann. Für den Fall, dass verschiedene Signalkomponenten in unterschiedlichen Frequenzbereichen übertragen werden, z.B. POTS und ISDN unterhalb einer Schwelle, z.B. 20 kHz für POTS oder 100 kHz für ISDN, und ADSL oberhalb dieser Schwelle, kann mittels eines Tiefpassfilters auch mehr als eine Signalkomponente gefiltert werden. Ein Tiefpassfilter mit einer geeignet gewählte Grenzfrequenz, z.B. bei 100 kHz, kann somit zur Filterung von ISDN und POTS Signalen verwendet werden, ADSL Signale werden dann ausgeblendet.

Das Filter 22 kann auch als steckbare Baugruppe ausgeführt sein. Die Vorrichtung ist dann leicht an verschiedene Signalkomponenten anpassbar. Beispielsweise werden das Gehäuse, die beiden Weichen 21, 23 sowie der Steckplatz für das Filter 22 vorgefertigt. Je nachdem für welche Situation die Vorrichtung verwendet werden soll, z.B. zur ISDN-Filterung, wird dann einfach der entsprechende Filtertyp an die vorgesehene Stelle eingesteckt.

Die steckbare Variante wirkt sich auch günstig aus bei Reparaturarbeiten, Umrüstarbeiten, Wartungsarbeiten, etc.

## Patentansprüche

1. Vorrichtung (3, 6) zur Filterung von ISDN- und POTS-Signalen aus Signalgemischen beinhaltend eine ISDN-Signalkomponente und eine ISDN-Gleichstromkomponente oder eine POTS-Signalkomponente und eine POTS-Gleichstromkomponente,
**dadurch gekennzeichnet,**
**dass** die Vorrichtung eine Reihenschaltung aus einer ersten Weiche (9), einer Filterbank (10) und einer zweiten Weiche (11) aufweist, dass die Weichen (9, 11) geeignet sind, die ISDN- und POTS-Signalkomponenten über die Filterbank (10) weiterzuleiten und die ISDN- und POTS-Gleichstromkomponenten über einen separaten Pfad (13, 14) weiterzuleiten, dass ein Detektor (12) vorgesehen ist, der geeignet ist, die ISDN- und die POTS-Gleichstromkomponenten zu detektieren, dass die Filterbank (10) ein ISDN-Filter (15) und ein POTS-Filter (16) beinhaltet, die über den Detektor (12) ansteuerbar sind, dass der Detektor (12) das ISDN-Filter (15) aktiviert, wenn die ISDN-Gleichstromkomponente detektiert wurde, und dass der Detektor (12) das POTS-Filter (16) aktiviert, wenn die POTS-Gleichstromkomponente detektiert wurde.

2. Vorrichtung (3, 6) nach Anspruch 1, **dadurch gekennzeichnet, dass** jede Weiche (9, 11) einen Übertrager beinhaltet, der aus einer Primärseite und einer Sekundärseite aufgebaut ist, dass die Primärseite eine Reihenschaltung aus einer ersten Spule, einem Kondensator und einer zweiten Spule beinhaltet, wobei die Gleichstromkomponente zwischen dem Kondensator und der ersten Spule und zwischen dem Kondensator und der zweiten Spule abgegriffen wird, und dass die Sekundärseite eine Reihenschaltung aus einer dritten und vierten Spule beinhaltet.

3. Vorrichtung (3, 6) nach Anspruch 1, **dadurch gekennzeichnet, dass** der Detektor (12) ein Schwellenwertdetektor ist, der bei einer detektierten Gleichstromkomponente oberhalb einer vorgegebenen Schwelle, die insbesondere in einem korrespondierenden Bereich zwischen 60 Volt und 100 Volt liegt, das ISDN-Filter (15) aktiviert und bei einer detektierten Gleichstromkomponente unterhalb der Schwelle das POTS-Filter (16) aktiviert.

4. Vorrichtung (3, 6) nach Anspruch 1, **dadurch gekennzeichnet, dass** die Filterbank (10) mindestens zwei durch den Detektor (12) angesteuerte Schalter (17, 18, 19, 20) zum Aktivieren und Deaktivieren des ISDN- (15) und des POTS-Filters (16) beinhaltet.

5. Vorrichtung (3, 6) nach Anspruch 1, **dadurch gekennzeichnet, dass** der Detektor (12) einen DC/DC-Wandler beinhaltet, mittels dessen die Gleichstromversorgung für das zu aktivierende Filter (15, 16) aus der detektierten Gleichstromkomponente gewonnen wird.

6. Vorrichtung (3, 6) nach Anspruch 1, **dadurch gekennzeichnet, dass** die Filter (15, 16) jeweils aus einem Längszweig und mindestens einem Querzweig aufgebaut sind, wobei im Längszweig eine Reihenschaltung von mindestens zwei LC-Gliedern und in jedem Querzweig ein Kondensator verwendet ist.

7. Vorrichtung (3, 6) nach Anspruch 1, **dadurch gekennzeichnet, dass** jede Weiche (9, 11) einen Opto-Koppler zur galvanischen Trennung beinhaltet.

8. Verfahren zum Filtern von ersten und zweiten Signalen aus Signalgemischen beinhaltend eine erste Signalkomponente und eine erste Gleichstromkomponente oder eine zweite Signalkomponente und eine zweite Gleichstromkomponente, **dadurch gekennzeichnet, dass** zunächst die Signalkomponente und die Gleichstromkomponente eines empfangenen Signalgemisches voneinander getrennt werden, dass abhängig von der Höhe der Gleichstromkomponente ein erstes Filter zur Herausfilterung der ersten Signalkomponente (15) aktiviert wird, wenn die Gleichstromkomponente die erste Gleichstromkomponente ist, und ein zweites Filter zur Herausfilterung der zweiten Signalkomponente (16) aktiviert wird, wenn die Gleichstromkomponente die zweite Gleichstromkomponente ist, und dem aktivierten Filter die Signalkomponente zugeführt wird, und dass anschließend die gefilterte Signalkomponente und die Gleichstromkomponente zusammengeführt werden.

9. Verfahren nach Anspruch 8, **dadurch gekennzeichnet, dass die erste** Signalkomponente eine ISDN-Signalkomponente ist, die erste Gleichstromkomponente eine ISDN-Gleichstromkomponente, die zweite Signalkomponente eine POTS-Signalkomponente und die zweite Gleichstromkomponente eine POTS-Gleichstromkomponente.

10. Verfahren nach Anspruch 8, **dadurch gekennzeichnet, dass** die erste Signalkomponente eine digitale Telefonsignalkomponente beinhaltet, die erste Gleichstromkomponente eine zugehörige Gleichstromkomponente, die zweite Signalkomponente eine analoge Telefonsignalkomponente und die zweite Gleichstromkomponente eine zugehörige Gleichstromkomponente.

## Claims

1. A device (3, 6) for filtering ISDN and POTS signals from composite signals containing an ISDN signal component and an ISDN DC component or a POTS signal component and a POTS DC component,
**characterized in**
**that** the device comprises a series combination of a first separating filter (9), a filter bank (10), and a second separating filter (11), that the separating filters (9, 11) are adapted to transfer the ISDN and POTS signal components via the filter bank (10) and to transfer the ISDN and POTS DC components via a separate path (13, 14), that a detector (12) is provided which is adapted to detect the ISDN and POTS DC components, that the filter bank (10) comprises an ISDN filter (15) and a POTS filter (16) which are controllable via the detector (12), that the detector (12) activates the ISDN filter (15) when the ISDN DC component was detected, and that the detector (12) activates the POTS filter (16) when the POTS DC component was detected.

2. A device (3, 6) as claimed in claim 1, **characterized in that** each of the separating filters (9, 11) comprises a repeating coil having a primary side and a secondary side, that the primary side contains a series combination of a first coil, a capacitor, and a second coil, the DC component being picked off between the capacitor and the first coil and between the capacitor and the second coil, and that the secondary side contains a series combination of a third coil and a fourth coil.

3. A device (3, 6) as claimed in claim 1, **characterized in that** the detector (12) is a threshold detector which activates the ISDN filter (15) upon detection of a DC component above a predetermined threshold, particularly above a threshold lying between 60 volts and 100 volts, and which activates the POTS filter (16) upon detection of a DC component below the threshold.

4. A device (3, 6) as claimed in claim 1, **characterized in that** the filter bank (10) further comprises at least two switches (17, 18, 19, 20) controlled by the detector (12) for activating and deactivating the ISDN filter (15) and the POTS filter (16).

5. A device (3, 6) as claimed in claim 1, **characterized in that** the detector (12) comprises a DC/DC converter for deriving the direct current required by the filter (15, 16) to be activated from the detected DC component.

6. A device (3, 6) as claimed in claim 1, **characterized in that** each of the filters (15, 16) consists of a series arm and at least one shunt arm, the series arm containing a series combination of at least two LC sections, and the at least one shunt arm containing a capacitor.

7. A device (3, 6) as claimed in claim 1, **characterized in that** each of the separating filters (9, 11) comprises an optocoupler for providing electric isolation.

8. A method of filtering first and second signals from composite signals containing a first signal component and a first DC component or a second signal component and a second DC component, **characterized in that** the signal component and the DC component of a received composite signal are separated from one another, that depending on the magnitude of the DC component, a first filter (15) for filtering out the first signal component is activated when the DC component is the first DC component, and a second filter (16) for filtering out the second signal component is activated when the DC component is the second DC component, that the signal component is applied to the activated filter, and that the filtered signal component and the DC component are subsequently combined.

9. A method as claimed in claim 8, **characterized in that** the first signal component is an ISDN signal component, the first DC component is an ISDN DC component, the second signal component is a POTS signal component, and the second DC component is a POTS DC component.

10. A method as claimed in claim 8, **characterized in that** the first signal component is a digital telephone signal component, the first DC component is an associated DC component, the second signal component is an analog telephone signal component, and the second DC component is an associated DC component.

## Revendications

1. Dispositif (3, 6) pour isoler des signaux ISDN et POTS à partir de signaux composites comportant une composante de signal ISDN et une composante de courant continu ISDN ou une composante de signal POTS et une composante de courant continu POTS,
**caractérisé en ce que** le dispositif présente un montage en série composé d'un premier filtre de bande (9), d'un banc filtrant (10) et d'un deuxième filtre de bande (11), **en ce que** les filtres de bande (9, 11) sont adaptés pour transférer les composantes de signal ISDN et POTS à travers le banc filtrant (10) et pour transférer les composantes de courant continu ISDN et POTS par un chemin séparé (13, 14), **en ce qu'**un détecteur (12) est prévu qui est adapté pour détecter les composantes de courant continu ISDN et POTS, **en ce que** le banc filtrant (10) comporte un filtre ISDN (15) et un filtre POTS (16) qui peuvent être commandés par l'intermédiaire du détecteur (12), **en ce que** le détecteur (12) active le filtre ISDN (15) quand la composante de courant continu ISDN a été détectée, et **en ce que** le détecteur (12) active le filtre POTS (16) quand la composante de courant continu POTS a été détectée.

2. Dispositif (3, 6) selon la revendication 1, **caractérisé en ce que** chaque filtre de bande (9, 11) comporte un répétiteur composé d'un côté primaire et d'un côté secondaire, **en ce que** le côté primaire comporte un montage en série composé d'une première bobine, d'un condensateur et d'une deuxième bobine, dans lequel la composante de courant continu est prélevée entre le condensateur et la première bobine et entre le condensateur et la deuxième bobine, et **en ce que** le côté secondaire comporte un montage en série composé d'une troisième et quatrième bobine.

3. Dispositif (3, 6) selon la revendication 1, **caractérisé en ce que** le détecteur (12) est un détecteur de valeur de seuil qui active le filtre ISDN (15) pour une composante de courant continu détectée au-dessus d'un seuil prédéterminé, qui se situe en particulier dans une gamme correspondante entre 60 volts et 100 volts, et active le filtre POTS (16) pour une composante de courant continu au-dessous du seuil.

4. Dispositif (3, 6) selon la revendication 1, **caractérisé en ce que** le banc filtrant (10) comporte au moins deux commutateurs (17, 18, 19, 20) commandés par le détecteur (12) pour activer et désactiver le filtre ISDN (15) et le filtre POTS (16).

5. Dispositif (3, 6) selon la revendication 1, **caractérisé en ce que** le détecteur (12) comporte un convertisseur CC/CC au moyen duquel l'alimentation en courant continu pour le filtre à activer (15, 16) est obtenue à partir de la composante de courant continu détectée.

6. Dispositif (3, 6) selon la revendication 1, **caractérisé en ce que** le filtre (15, 16) se compose respectivement d'une branche longitudinale et d'au moins une branche en dérivation, dans lequel un montage en série d'au moins deux composants LC est utilisé dans la branche longitudinale et un condensateur est utilisé dans chaque branche en dérivation.

7. Dispositif (3, 6) selon la revendication 1, **caractérisé en ce que** chaque filtre de bande (9, 11) comporte un optocoupleur pour l'isolation galvanique.

8. Procédé pour isoler des premiers et deuxièmes signaux à partir de signaux composites comportant une première composante de signal et une première composante de courant continu ou une deuxième composante de signal et une deuxième composante de courant continu, **caractérisé en ce que** l'on sépare d'abord la composante de signal et la composante de courant continu d'un signal composite reçu, **en ce qu'**en fonction du niveau de la composante de courant continu, un premier filtre est activé pour isoler la première composante de signal (15) quand la composante de courant continu est la première composante de courant continu, et un deuxième filtre est activé pour isoler la deuxième composante de signal (16) quand la composante de courant continu est la deuxième composante de courant continu, et la composante de signal est amenée au filtre activé, et **en ce qu'**ensuite, la composante de signal filtrée et la composante de courant continu sont réunies.

9. Procédé selon la revendication 8, **caractérisé en ce que** la première composante de signal est une composante de signal ISDN, la première composante de courant continu est une composante de courant continu ISDN, la deuxième composante de signal est une composante de signal POTS et la deuxième composante de courant continu est une composante de courant continu POTS.

10. Procédé selon la revendication 8, **caractérisé en ce que** la première composante de signal comporte une composante de signal téléphonique numérique qui, la première composante de courant continu comporte une composante de courant continu associée, la deuxième composante de signal comporte une composante de signal téléphonique analogique et la deuxième composante de courant continu comporte une composante de courant continu associée.
